# EUROPÄISCHE PATENTANMELDUNG

(11) **EP 3 216 354 A1**
(43) Veröffentlichungstag der Anmeldung: **13.09.2017**
(21) Anmeldenummer: 16159251.4
(22) Anmeldetag: 08.03.2016
(51) Int. Cl.: A23L 29/212, A23L 29/269, A23L 15/00, A23J 3/14

(54) **EIKLAR-ERSATZPRODUKT**

(71) Anmelder: Antersdorfer Mühle GmbH & Co Vertriebs KG, 84359 Simbach am Inn (DE)
(72) Erfinder: Priemeier, Johann, 84359 Simbach am Inn (DE)
(74) Vertreter: Rothkopf, Ferdinand

(57) **Zusammenfassung**

Ein erfindungsgemäßes Eiklar-Ersatzprodukt umfasst gezielt zwischen 39,0 und 58,0 Gewichtsprozent Protein pflanzlicher Herkunft.

## Beschreibung

Die Erfindung betrifft ein Eiklar-Ersatzprodukt, welches zum Ersetzen von ansonsten natürlichem Eiklar eines Eies bei dessen Verwendung als Lebensmittel dient.

Eier, die als Lebensmittel verwendet werden, sind in der Regel Hühnereier. Ein Hühnerei besteht zu ca. 63% (dreiundsechzig Prozent) aus Eiklar, zu ca. 27% (siebenundzwanzig Prozent) aus Eigelb bzw. Dotter und zu 10% (zehn Prozent) aus Eischale. Hühnereier werden je nach Gewicht üblicherweise in Gewichtsklassen S, M, L und XL sortiert. Die Gewichtsklassen sind: S unter 53 (dreiundfünfzig) g, M von 53 (dreiundfünfzig) bis unter 63 (dreiundsechzig) g, L von 63 (dreiundsechzig) bis unter 73 (dreiundsiebzig) g und XL über 73 (dreiundsiebzig) g.

Eiklar eines natürlichen Eies, insbesondere eines Hühnereies, ist ein vielseitiges Nahrungsmittel und eine vielverwendete Nahrungsmittelkomponente. Allerdings gibt es die Gefahr einer Salmonellen-Kontamination von Eiklar. Natürliches Eiklar vollständig vermeiden sollten ferner Menschen mit einer Hühnereiallergie. Manche Menschen lehnen den Verzehr von Eiern und daher auch von deren Eiklar aus ethischen Gründen ab, z.B. wenn sie sich vegan ernähren. Um solchen Bedenken und Problemen entgegenzuwirken, wurden bereits zahlreiche ProduktZusammensetzungen vorgeschlagen, die das natürliche Eiklar ersetzen sollen.

Trotz intensiver Anstrengungen waren bisher solche Eiklar-Ersatzprodukte nicht so erfolgreich wie erwünscht. Ein dabei bestehender Problempunkt ist die Verwendung innerhalb von Nahrungsmitteln, da die rheologischen Eigenschaften von bekannten Eiklar-Ersatzprodukten wesentlich von denen des Eiklars der natürlichen Eier abweichen. Ein Verbraucher, der ein Eiklar-Ersatzprodukt nutzt, zum Beispiel um Baiser, Makronen, Eiweißshakes oder ähnliches zuzubereiten, erwartet etwa, dass die Verarbeitung des Eiklar-Ersatzprodukts dem des Eiklars eines natürlichen Eies gleicht. Es wird ferner erwartet, dass beim Steifschlagen des Eiklar-Ersatzprodukts dieses sich ähnlich verhält wie ein natürliches Eiklar. Besonders wichtig ist, dass das Eiklar-Ersatzprodukt temperaturstabil ist, da z.B. ein Kuchen mit einer Baiserhaube bei einer Temperatur von 180 °C im Ofen gebacken wird. Das hergestellte Produkt sollte, wenn es serviert und vom Konsumenten gegessen wird, eine ähnliche Konsistenz und ein ähnliches Aussehen haben, wie ein Produkt, das aus natürlichem Eiklar hergestellt worden ist. Die Farbe des Eiklar-Ersatzprodukts ist vor allem wichtig, wenn das Eiklar für "weiße" Speisen benutzt wird, wie z.B. für das ungarische Gericht "Vogelmilch". Ein Abweichen der Farbe des Eiklar-Ersatzprodukts von der weißen Farbe wird hier vom Verbraucher nicht toleriert.

Bekannte Eiklar-Ersatzprodukte sind oft kompliziert bei der Verarbeitung. Besonders die Temperaturstabilität der Eiklar-Ersatzprodukte lässt oft zu wünschen übrig. Ein Kuchen z.B. mit einer Baiserhaube aus einem Eiklar-Ersatzprodukt, das nicht temperaturstabil ist, ist gegebenenfalls nach dem Backen nicht präsentierbar. Zusätzlich dazu gibt es auch Probleme mit Fremdgeschmack von bestimmten Ingredienzen oder mit Verarbeitungsschritten, welche die Verbraucher durchführen müssen, um ein Eiklar-Ersatzprodukt benutzen zu können.

Die dieser Erfindung zugrundeliegende Aufgabe beinhaltet, ein Eiklar-Ersatzprodukt zu schaffen, dass geschmacklich und in der Konsistenz einem natürlichen Eiklar möglichst nahe kommt, ohne die oben erwähnten Nachteile aufzuweisen.

Die Aufgabe ist gemäß der Erfindung mit einem Eiklar-Ersatzprodukt gelöst, das zwischen 39 (neununddreißig) und 58 (achtundfünfzig) Gewichtsprozent Protein pflanzlicher Herkunft umfasst.

Proteine sind allgemein biologische Makromoleküle, die aus Aminosäuren durch Peptidbindungen aufgebaut sind. Das Eiklar eines Hühnereis besteht in der Regel aus ca. 40 (vierzig) verschiedenen tierischen Proteinen. Im Eiklar bzw. dem Weißen eines Hühnereies sind ca. 11 (elf) Gewichtsprozent tierisches Protein enthalten. Der Rest des Eiklars besteht nicht aus Proteinen.

Erfindungsgemäß wird demgegenüber als Eiklar-Ersatzstoff insbesondere pflanzliches Protein verwendet. Das pflanzliche Protein für den erfindungsgemäßen Eiklar-Ersatzstoff wird bevorzugt aus Erbsen gewonnen. Das Protein aus Erbsen weist eine sehr hochwertige Kombination aus essentiellen und nicht essentiellen Aminosäuren, wie zum Beispiel Arginin und Lysin, auf. Zudem ist Protein aus Erbsen arm an Allergenen und reich an Eisen. Diese Kombination weist vor allem für ältere Menschen und Kinder vielfältige Vorteile für deren Gesundheit auf. Das Protein aus Erbsen ist ferner besonders weiß, so dass die Farbe des erfindungsgemäßen Eiklar-Ersatzproduktes dann dem Produkt von "natürlichem" Eiklar gleicht.

Alternativ zu dem Protein aus Erbsen kann das Protein auch aus anderen Pflanzenarten wie beispielhaft Lupinien oder Ackerbohnen gewonnen werden. Bevorzugt werden hier Proteine aus Pflanzen gewählt, die nicht gentechnisch verändert sind. Protein aus gentechnisch veränderten Pflanzen, wie zum Beispiel aus der Sojapflanze, lehnen kritische Menschen, insbesondere Veganer, ab.

Das erfindungsgemäße Eiklar-Ersatzprodukt liegt bevorzugt als Pulver oder Granulat vor. Pulver oder Granulat ist ein in feinste oder kleine Teilchen zerriebener, trockener Stoff. Der Vorteil des dem erfindungsgemäßen Eiklar-Ersatzprodukts in Pulver- oder Granulatform ist, dass es vom Gewicht leichter ist als das vergleichbare, natürliche Eiklar. Das verringerte Gewicht des Eiklar-Ersatzproduktes führt zu verringerten Transportkosten von einem Herstellungsort zu einem Verbraucher. Ein weiterer Vorteil für den Verbraucher des Eiklar-Ersatzprodukts in Form von Pulver oder Granulat ist auch, dass es einfach zu dosieren ist.

Um ein weitgehend dem Eiklar entsprechendes Produkt zu erzeugen, ist beim Verbraucher das erfindungsgemäße Eiklar-Ersatzprodukt vorzugsweise mit Wasser zu mischen. Beim Mischen wird eine Menge bzw. Masse des Eiklar-Ersatzproduktes in ein Gefäß gegeben und mit Wasser verrührt. Um eine gleichmäßige Durchmischung zu erreichen, ist vorteilhaft während der Zugabe des Wassers zu dem Eiklar-Ersatzprodukt beides miteinander zu verrühren. Die Menge an zugegebenem Wasser bestimmt die Konsistenz des fertigen Produktes und ist vom Verbraucher je nach Wunsch zu variieren.

Vorzugsweise ist für ein Eiklar 5 (fünf) g des erfindungsgemäßen Eiklar-Ersatzprodukts mit 15 (fünfzehn) bis 35 (fünfunddreißig) ml Wasser zu vermischen. Bevorzugt ergeben 5 (fünf) g auf 15 (fünfzehn) bis 30 (dreißig) ml Wasser und besonders bevorzugt ergeben 5 (fünf) g Eiklar-Ersatzprodukt und 22 (zweiundzwanzig) bis 28 (achtundzwanzig) ml Wasser ein dem natürlichen Eiklar ähnliches Produkt. Um zum Beispiel ein Eiklar eines Hühnereis in der Gewichtsklasse S zu erhalten, sind 5 (fünf) g Eiklar-Ersatzprodukt und 25 (fünfundzwanzig) ml Wasser zu verrühren.

Alternativ dazu wird das Eiklar-Ersatzprodukt gemäß der Erfindung bereits bei der Herstellung mit Wasser versetzt und liegt dann beim Verbraucher in flüssiger bzw. zähflüssiger Form vor. Das Eiklar-Ersatzprodukt ist so vom Verbraucher sofort einsetzbar ohne es vorher mit Wasser anrühren zu müssen.

Ein weiterer Vorteil des erfindungsgemäßen Eiklar-Ersatzproduktes ist die Lebensmittelsicherheit der mit dem Eiklar-Ersatzprodukt hergestellten Lebensmittel. Lebensmittelsicherheit ist ein Oberbegriff für alle Maßnahmen und Konzepte, die sicherstellen sollen, dass Lebensmittel für den Endverbraucher zum Verzehr geeignet sind und von ihnen keine gesundheitlichen Beeinträchtigungen oder Schädigungen ausgehen können. Die Lebensmittelsicherheit ist für Produkte, die mit dem erfindungsgemäßen Eiklar-Ersatzprodukt hergestellt sind, einfacher zu gewährleisten als mit Eiklar eines natürlichen Eies. Wie bereits erwähnt besteht bei natürlichen Eiern die Gefahr einer Salmonellen-Kontamination. Diese ist bei Verwendung des erfindungsgemäßen Eiklar-Ersatzproduktes in der Regel auszuschließen.

Vorzugsweise umfasst das erfindungsgemäß Eiklar-Ersatzprodukt zwischen 44,0 (vierundvierzig Komma null) und 55,0 (fünfundfünfzig Komma null) Gewichtsprozent Protein pflanzlicher Herkunft, insbesondere zwischen 47,0 (siebenundvierzig Komma null) und 52,0 (zweiundfünfzig Komma null) Gewichtsprozent Protein pflanzlicher Herkunft. Überraschenderweise hat sich Protein aus Erbsen in dem Eiklar-Ersatzprodukt als besonders vorteilhaft hinsichtlich dessen Hitzestabilität herausgestellt. Das Eiklar-Ersatzprodukt mit Protein aus Erbsen ist daher besonders für das Backen bei hohen Temperaturen geeignet.

Erfindungsgemäß vorteilhaft umfasst das Eiklar-Ersatzprodukt ferner zwischen 0,1 (null Komma eins) und 2,4 (zwei Komma vier) Gewichtsprozent Xanthan. Xanthan ist ein natürlich vorkommendes Polysaccharid. Xanthan wird mittels Bakterien der Gattung Xanthomonas aus einem zuckerhaltigen Substrat gewonnen. Xanthan ist ein Lebensmittelzusatzstoff mit der E-Nummer 415 (vierhundertfünfzehn) und ist für Öko-Lebensmittel zugelassen. Da Xanthan vom menschlichen Organismus nicht metabolisiert werden kann, wird es zu den Ballaststoffen gezählt. Ein Vorteil von Xanthan ist das gute Wasserbindevermögen. Dies trägt dazu bei, dass das derartige Eiklar-Ersatzprodukt länger Wasser an sich binden kann. Das aus dem Eiklar-Ersatzprodukt hergestellte Produkt behält dann aufgrund des besseren Wasserbindevermögens länger seine Feuchtigkeit. Das Produkt bleibt damit über einen längeren Zeitraum nach der Herstellung frisch.

Das Eiklar-Ersatzprodukt umfasst ferner erfindungsgemäß vorteilhaft zwischen 0,5 (null Komma fünf) und 1,7 (eins Komma sieben) Gewichtsprozent Xanthan, insbesondere zwischen 0,8 (null Komma acht) und 1,3 (eins Komma drei) Gewichtsprozent Xanthan. Wie bereits beschrieben wird mittels des Xanthans der Zeitraum der Frische nach der Herstellung des Produkts aus dem Eiklar-Ersatzprodukts verbessert. Xanthan erhöht auch die Viskosität des Produkts, das aus dem Eiklar-Ersatzprodukt hergestellt ist. Die Viskosität ist ein Maß für die Zähflüssigkeit eines Fluids. Der Verbraucher ist von natürlichem Eiklar eine Viskosität gewöhnt, welche er auch bei dem Eiklar-Ersatzprodukt erwartet. Mittels Xanthan wird die Viskosität des Eiklar-Ersatzprodukts an die Viskosität des natürlichen Eiklars angepasst. Xanthan wird gemäß der Erfindung bevorzugt als Pulver oder Granulat verwendet.

Vorteilhaft umfasst das erfindungsgemäße Eiklar-Ersatzprodukt ferner zwischen 4,0 (vier Komma null) und 14,0 (vierzehn Komma null) Gewichtsprozent Maltodextrin. Maltodextrin ist ein Kohlenhydratgemisch, das durch Hydrolyse von Stärke hergestellt wird. Maltodextrin wird gemäß der Erfindung zur Verbesserung der rheologischen und energetischen Eigenschaften des Eiklar-Ersatzprodukts eingesetzt. Maltodextrin ist dabei insbesondere ein Stabilisator, der die Schaumstabilität des erfindungsgemäßen Eiklar-Ersatzprodukts verbessert. Vor allem bei der Herstellung von Eischnee aus dem Eiklar-Ersatzprodukt ist es von Vorteil, wenn der Eischnee besonders "steif" gelingt. Maltodextrin wird gemäß der Erfindung bevorzugt als Pulver oder Granulat verwendet.

Vorteilhafterweise umfasst das erfindungsgemäß Eiklar-Ersatzprodukt zwischen 7,0 (sieben Komma null) und 13,0 (dreizehn Komma null) Gewichtsprozent Maltodextrin, insbesondere zwischen 8,5 (acht Komma fünf) und 11,0 (elf Komma null) Gewichtsprozent Maltodextrin. Überraschenderweise ist diese Menge an Maltodextrin im Eiklar-Ersatzprodukt besonders vorteilhaft zum Erzeugen von Eischnee. Ein weiterer Vorteil des Maltodextrin in dem Eiklar-Ersatzprodukt ist, dass mittels des Maltodextrin unerwünschten Beigeschmäcke, sogenannte Fehl-Aromen, zu vermeiden sind.

In bevorzugter Weise umfasst ferner das erfindungsgemäße Eiklar-Ersatzprodukt zwischen 0,1 (null Komma eins) und 3,0 (drei Komma null) Gewichtsprozent Zitronensäure. Zitronensäure ist eine farblose, wasserlösliche Carbonsäure, die zu den Fruchtsäuren zählt. Zitronensäure wird industriell durch Fermentation zuckerhaltiger Rohstoffe mittels eines Schimmelpilzes, in der Regel Aspergillus niger, hergestellt. Eine weitere Art um Zitronensäure zu gewinnen ist, diese aus Zitrusfrüchten zu extrahieren. Zitronensäure ist ein Antioxidationsmittel, das einen Oxidationsprozess durch Sauerstoff oder Lichteinfluss reduziert. Vorteilhaft wird so die durch den Oxidationsprozess stattfindende Geruchs-, Farb- und Geschmacksveränderung verlangsamt. Mit dem Verlangsamen des Oxidationsprozesses mittels Zitronensäure sind vorteilhaft das Eiklar-Ersatzprodukt und das damit hergestellte Produkt länger haltbar.

Erfindungsgemäß vorteilhaft umfasst das Eiklar-Ersatzprodukt zwischen 0,1 (null Komma eins) und 3,0 (drei Komma null) Gewichtsprozent Zitronensäure, insbesondere zwischen 1,7 (eins Komma sieben) und 2,3 (zwei Komma drei) Gewichtsprozent Zitronensäure. Wie allgemein bekannt, ist Zitronensäure ein Säuerungsmittel. Mittels Zitronensäure wird erfindungsgemäß bevorzugt der Säuregrad in dem Eiklar-Ersatzstoff reguliert. Die Zitronensäure in dem Eiklar-Ersatzprodukt passt dessen "sauren" Geschmack an das natürliche Eiklar an. Die Zitronensäure ist bevorzugt als Pulver in dem Eiklar-Ersatzprodukt enthalten.

Vorteilhaft umfasst das Eiklar-Ersatzprodukt ferner zwischen 0,1 (null Komma eins) und 2,5 (zwei Komma fünf) Gewichtsprozent Salz, insbesondere zwischen 1,5 (eins Komma fünf) und 2,2 (zwei Komma zwei) Gewichtsprozent Salz. Salz wird, wie allgemein bekannt, zur Konservierung von Lebensmitteln verwendet. Ein weiterer Vorteil von Salz ist, dass es als ein Geschmacksverstärker bzw. Geschmacksregulierer wirkt. Mittels des Salzes wird gemäß der Erfindung ein Geschmacksprofil des Eiklar-Ersatzprodukts erzeugt, welches an das Geschmacksprofil von Eiklar eines natürlichen Eies angeglichen ist.

Ferner umfasst das erfindungsgemäße Eiklar-Ersatzprodukt vorteilhaft zwischen 28,0 (achtundzwanzig Komma fünf) und 40,0 (vierzig Komma null) Gewichtsprozent Stärke, insbesondere zwischen 30,0 (dreißig Komma null) und 38,0 (achtunddreißig Komma null) Gewichtsprozent Stärke. Erfindungsgemäß wird Stärke als Verdickungsmittel eingesetzt. Verdickungsmittel sind Stoffe, die Wasser binden. Durch das Binden von Wasser innerhalb des hergestellten Lebensmittels kommt es zu einer Erhöhung von dessen Viskosität. So kann das damit hergestellte Produkt hinsichtlich seiner Konsistenz an das jeweilige natürliche Vorbild angepasst werden. Bevorzugt wird die Stärke für das erfindungsgemäße Eiklar-Ersatzprodukt aus Reis gewonnen. Die Stärke aus Reis hat sich besonders vorteilhaft für den Geschmack und die Farbe des Eiklar-Ersatzproduktes erwiesen. Die Stärke aus Reis liegt bevorzugt als Pulver oder Granulat vor.

Überraschenderweise wurde mit der Erfindung festgestellt, dass das derartige vorteilhafte Eiklar-Ersatzprodukt aus leicht verfügbaren Materialien zusammengestellt und damit auch besonders einfach herzustellen ist. Vorteilhaft weist das Eiklar-Ersatzprodukt verbesserte gesundheitliche Eigenschaften auf. Weiter resultiert das derartige Eiklar-Ersatzprodukt in einem konsumierbaren Produkt, das seine Frische länger beibehalten kann als vergleichbare Produkte oder Produkte, die aus echtem bzw. natürlichem Eiklar hergestellt wurden. Beispielsweise können Makronen und Baiser aus natürlichem Eiklar, wenn sie einige Stunden bzw. Tage vor dem Verzehr hergestellt werden, hart werden und dann im Mund zu einem verschlechterten Kaugefühl führen. Makronen und Baiser, die mit dem erfindungsgemäßen Eiklar-Ersatzprodukt hergestellt sind, behalten dahingegen hinsichtlich der Zusammensetzung und des Geschmacks über einen längeren Zeitraum gute Eigenschaften bei.

### Kurzbeschreibung der Zeichnungen

Nachfolgend wird ein Ausführungsbeispiel der erfindungsgemäßen Lösung anhand der beigefügten schematischen Zeichnungen näher erläutert. Es zeigt:
- Fig. 1: eine schematische Übersicht der Zusammensetzung eines ersten Ausführungsbeispiels eines erfindungsgemäßen Eiklar-Ersatzprodukts, und
- Fig. 2: eine schematische Übersicht der Zusammensetzung eines zweiten Ausführungsbeispiels eines erfindungsgemäßen Eiklar-Ersatzprodukts.

### Detaillierte Beschreibung der Ausführungsbeispiele

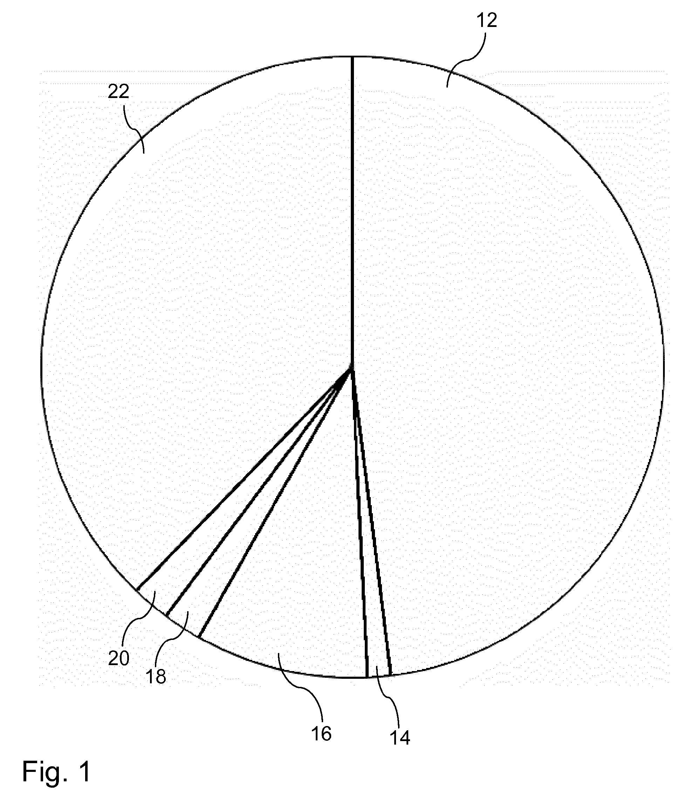

Fig. 1 zeigt die Zusammensetzung eines Eiklar-Ersatzprodukts 10. Bei dieser Zusammensetzung ist pflanzliches Protein 12 mit achtundvierzig Gewichtsprozent im Eiklar-Ersatzprodukt 10 vorhanden. Das Protein 12 ist aus Erbsen gewonnen worden und liegt in Pulverform vor. Als weiterer Bestandteil umfasst das Eiklar-Ersatzprodukt 10 Xanthan 14 mit eins Komma zwei Gewichtsprozent und Maltodextrin 16 mit neun Gewichtsprozenten. Beide Bestandteile liegen als Pulver oder Mehl vor. Ein weiterer Bestandteil des Eiklar-Ersatzprodukts 10 gemäß Fig. 1 ist Zitronensäure 18 mit einem Anteil von zwei Gewichtsprozenten in der Form von Pulver. Ferner weist das Eiklar-Ersatzprodukt 10 Salz 20 mit einem Anteil von zwei Gewichtsprozenten auf. Zudem ist Stärke 22 mit fünfunddreißig Gewichtsprozent in dem Eiklar-Ersatzprodukt 10 enthalten. Bei der Stärke handelt es sich um Stärke aus Reis in der Form von Pulver.

Der Vorteil dieser ersten Ausführungsform des Eiklar-Ersatzproduktes 10 gemäß Fig. 1 ist, dass das daraus resultierende Produkt eine besonders vorteilhaft weiße Farbe aufweist.

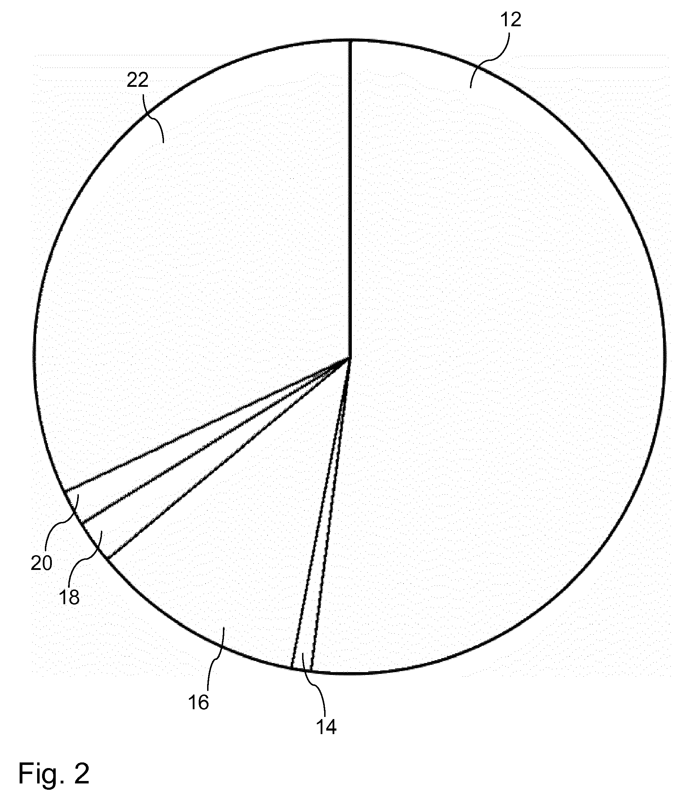

Fig. 2 zeigt die Zusammensetzung eines Eiklar-Ersatzprodukts 10. Bei dieser Zusammensetzung ist pflanzliches Protein 12 mit zweiundfünfzig Gewichtsprozent im Eiklar-Ersatzprodukt 10 vorhanden. Das Protein 12 ist ebenso aus Erbsen gewonnen worden. Als weiterer Bestandteil umfasst das Eiklar-Ersatzprodukt 10 Xanthan 14 mit einem Gewichtsprozent und Maltodextrin 16 mit elf Gewichtsprozent. Ein weiterer Bestandteil des Eiklar-Ersatzprodukts 10 gemäß Fig. 2 ist Zitronensäure 18 mit einem Anteil von zwei Komma zwei Gewichtsprozent. Des Eiklar-Ersatzprodukts 10 weist ferner Salz 20 mit eins Komma acht Gewichtsprozent auf. Zudem ist Stärke 22 mit fünfunddreißig Gewichtsprozent enthalten. Bei der Stärke handelt es sich um Stärke aus Reis. Alle Bestandteile des Eiklar-Ersatzproduktes 10 liegen in der Form vom Pulver oder Mehl vor.

Der Vorteil dieser zweiten Ausführungsform des Eiklar-Ersatzproduktes 10 gemäß Fig. 2 ist, dass das daraus resultierende Produkt besonders vorteilhafte rheologische Eigenschaften aufweist.

Abschließend sei angemerkt, dass sämtlichen Merkmalen, die in den Anmeldungsunterlagen und insbesondere in den abhängigen Ansprüchen genannt sind, trotz des vorgenommenen formalen Rückbezugs auf einen oder mehrere bestimmte Ansprüche, auch einzeln oder in beliebiger Kombination eigenständiger Schutz zukommen soll.

### Bezugszeichenliste

- 10: Eiklar-Ersatzprodukt
- 12: Protein
- 14: Xanthan
- 16: Maltodextrin
- 18: Zitronensäure
- 20: Salz
- 22: Stärke

## Patentansprüche

1. Eiklar-Ersatzprodukt (10),
**dadurch gekennzeichnet, dass** dieses zwischen 39,0 und 58,0 Gewichtsprozent Protein (12) pflanzlicher Herkunft umfasst.

2. Eiklar-Ersatzprodukt nach Anspruch 1,
das zwischen 44,0 und 55,0 Gewichtsprozent Protein (12) pflanzlicher Herkunft, insbesondere zwischen 47,0 und 52,0 Gewichtsprozent Protein (12) pflanzlicher Herkunft umfasst.

3. Eiklar-Ersatzprodukt nach Anspruch 1 oder 2,
das ferner zwischen 0,1 und 2,4 Gewichtsprozent Xanthan (14) umfasst.

4. Eiklar-Ersatzprodukt nach Anspruch 3,
das ferner zwischen 0,5 und 1,7 Gewichtsprozent Xanthan (14), insbesondere zwischen 0,8 und 1,3 Gewichtsprozent Xanthan (14) umfasst.

5. Eiklar-Ersatzprodukt nach einem der Ansprüche 1 bis 4,
das ferner zwischen 4,0 und 14,0 Gewichtsprozent Maltodextrin (16) umfasst.

6. Eiklar-Ersatzprodukt nach Anspruch 5,
das ferner zwischen 7,0 und 13,0 Gewichtsprozent Maltodextrin (16), insbesondere zwischen 8,5 und 11,0 Gewichtsprozent Maltodextrin (16) umfasst.

7. Eiklar-Ersatzprodukt nach einem der Ansprüche 1 bis 6,
das ferner zwischen 0,1 und 3,0 Gewichtsprozent Zitronensäure (18), umfasst.

8. Eiklar-Ersatzprodukt nach Anspruch 7,
das ferner zwischen 0,1 und 3,0 Gewichtsprozent Zitronensäure (18), insbesondere zwischen 1,7 und 2,3 Gewichtsprozent Zitronensäure (18) umfasst.

9. Eiklar-Ersatzprodukt nach einem der Ansprüche 1 bis 8,
das ferner zwischen 0,1 und 2,5 Gewichtsprozent Salz (20), insbesondere zwischen 1,5 und 2,2 Gewichtsprozent Salz (20) umfasst.

10. Eiklar-Ersatzprodukt nach einem der Ansprüche 1 bis 9,
das ferner zwischen 28,0 und 40,0 Gewichtsprozent Stärke (22), insbesondere zwischen 30,0 und 38,0 Gewichtsprozent Stärke (22) umfasst.
